# EUROPEAN PATENT APPLICATION

(11) **EP 4 249 375 A1**
(43) Date of publication of application: **27.09.2023**
(21) Application number: 23163216.7
(22) Date of filing: 21.03.2023
(51) Int. Cl.: B64D 9/00, B60P 7/08

(54) **TIE DOWN FOR CARGO HANDLING SYSTEMS**

(30) Priority: 25.03.2022 US 202217704731
(71) Applicant: Goodrich Corporation, Charlotte, NC 28217-4578 (US)
(72) Inventor: PFAU, Ryan E., Jamestown, 58401 (US); VAN BERKOM, Brian J., Jamestown, ND, 58401 (US)
(74) Representative: Dehns

(57) **Abstract**

A tie down (110) for a cargo handling system may comprise a carriage (120). the carriage may include a first sidewall surface (134), a second sidewall surface (136) opposite the first sidewall surface, a first surface (200) extending from the first sidewall surface to the second sidewall surface, and a second surface (202) opposite the first surface. A first rail interface pin (180) may be configured to extend from the first sidewall surface. A second rail interface pin (182) may be configured to extend from the second sidewall surface. A seat fitting channel (122) may be formed in the carriage and may extend between the first sidewall surface and the second sidewall surface.

## Description

### FIELD

The present disclosure relates generally to cargo handling systems, and more specifically, to tie downs for securing aircraft cargo.

### BACKGROUND

Cargo handling systems, such as those used by aircraft for transporting containerized cargo or pallets, also referred to as unit load devices (ULDs), typically include longitudinal roller trays containing transport rollers positioned along a cargo deck floor to facilitate movement of the ULDs relative to the deck floor. The cargo handling systems also include restraint devices attached at various installation points located along the cargo deck and configured to engage and secure cargo. These restraint devices typically include primary restraint devices and supplemental restraint devices. Primary restraint devices are stationary and positioned at predetermined installation points on the cargo deck or in the roller tray. Supplemental restraint devices are moveable. In this regard, the location of the supplemental restraint devices can be changed based on the restraint needs of a particular cargo load.

The straps which are attached to the current supplemental restraint devices generally employ a hook for connecting to the supplemental restraint device and/or a "seat track" attachment means (e.g., a fitting attached to a strap and configured to be received in a channel defined by the supplemental restraint device). The supplemental restraint devices that are compatible with the seat track fittings generally include two interface pins on each side of the devices to secure the device to the roller tray. This two pin configuration tends to limit the possible locations for the supplemental restraint device and does not allow for rotation of the device and therefore may not optimally distribute load from the restraint to the cargo deck. The supplemental restraint devices that are compatible with the hook fittings allow for rotation of the device within the roller tray but are generally only usable with straps that employ hooks. Accordingly, a supplemental restraint device that is compatible with both hook straps and seat track fittings is needed.

### SUMMARY

A tie down for a cargo handling system is disclosed herein. In accordance with various embodiments, the tie down may comprise a carriage including a first sidewall surface, a second sidewall surface opposite the first sidewall surface, a first surface extending from the first sidewall surface to the second sidewall surface, and a second surface opposite the first surface. A first rail interface pin is configured to extend from the first sidewall surface. A second rail interface pin is configured to extend from the second sidewall surface. A seat fitting channel is formed in the carriage and may extend between the first sidewall surface and the second sidewall surface.

In various embodiments, the seat fitting channel is defined by a channel floor, a first channel wall extending from the channel floor, a second channel wall extending from the channel floor, a first channel flange extending from the first channel wall and away from the first surface, and a second channel flange extending from the second channel wall and away from the second surface. The first channel flange includes a first upper surface oriented away from the channel floor, a first lower surface oriented toward the channel floor, and a first vertical surface extending between the first upper surface and the first lower surface. The second channel flange includes a second upper surface oriented away from the channel floor, a second lower surface oriented toward the channel floor, and a second vertical surface extending between the second upper surface and the second lower surface.

In various embodiments, the first vertical surface of the first channel flange defines a first arcuate section and a first neck section, and the second vertical surface of the second channel flange defines a second arcuate section and a second neck section.

In various embodiments, a first distance between the first surface of the carriage and the first vertical surface of the first channel flange is greater a second distance between the first surface of the carriage and the first vertical surface of the first channel flange. The first distance is measured at the first neck section and along the first upper surface. The second distance is measured at the first arcuate section and along the first upper surface.

In various embodiments, a first stud pin is coupled to the first rail interface pin and extends through a first stud opening defined by the carriage. A second stud pin is coupled to the second rail interface pin and extends through a second stud opening defined by the carriage.

In various embodiments, the first stud opening may include a first portion having a first diameter and a second portion having a second diameter less than the first diameter. The first portion may be located closer to the first sidewall surface as compared to the second portion.

In various embodiments, the first stud opening and the second stud opening may be formed in a recessed surface of the carriage. The recessed surface is recessed with respect to the first surface of the carriage.

In various embodiments, a length of the carriage, as measured between the first sidewall surface and the second sidewall surface, may be greater than a width of the carriage, as measured between the first surface and the second surface.

A roller tray assembly is also disclosed herein. In accordance with various embodiments, the roller tray assembly may comprise a roller tray having a first rail defining a plurality of first pin openings and a second rail defining a plurality of second pin openings, a roller located between the first rail and the second rail, and a tie down located between the first rail and the second rail. The tie down may comprise a carriage including a first sidewall surface oriented toward the first rail and a second sidewall surface oriented toward the second rail, a first rail interface pin configured to extend from the first sidewall surface, a second rail interface pin configured to extend from the second sidewall surface, and a seat fitting channel formed in the carriage.

In various embodiments, the seat fitting channel is defined by a channel floor, a first channel wall extending from the channel floor, a second channel wall extending from the channel floor, a first channel flange extending from the first channel wall and away from a first surface of the carriage, and a second channel flange extending from the second channel wall and away from a second surface of the carriage. The first channel flange may include a first upper surface oriented away from the channel floor, a first lower surface oriented toward the channel floor, and a first vertical surface extending between the first upper surface and the first lower surface. The second channel flange may include a second upper surface oriented away from the channel floor, a second lower surface oriented toward the channel floor, and a second vertical surface extending between the second upper surface and the second lower surface.

In various embodiments, the carriage may be configured to rotate relative to the first rail and the second rail. In various embodiments, a length of the carriage, as measured between the first sidewall surface and the second sidewall surface, may be greater than a width of the carriage, as measured between the first surface and the second surface.

In various embodiments, the first vertical surface of the first channel flange defines a plurality of first arcuate sections and a plurality of first neck sections, and the second vertical surface of the second channel flange defines a plurality of second arcuate sections and a plurality of second neck sections.

In various embodiments, the first rail interface pin may rotate ±83.5° about an axis without generating contact between the carriage and a floor of the roller tray, with 0° being 90° as measured about the axis from the floor of the roller tray.

In various embodiments, the tie down may further include a first stud pin coupled to the first rail interface pin and extending through a first stud opening defined by the carriage, and a second stud pin coupled to the second rail interface pin and extending through a second stud opening defined by the carriage.

A restraint assembly is also disclosed herein. In accordance with various embodiments, the restraints assembly may comprise a fitting including a first protrusion extending from a first fitting sidewall and a second protrusion extending from a second fitting sidewall, and a tie down configured to receive the fitting. The tie down may comprise a carriage including a first sidewall surface and a second sidewall surface oriented away from the first sidewall surface, a first rail interface pin configured to extend from the first sidewall surface, a second rail interface pin configured to extend from the second sidewall surface, and a seat fitting channel formed in the carriage and configured to receive the fitting. The seat fitting channel is configured such that the fitting may translate within the seat fitting channel in a first direction toward the first sidewall surface and in a second direction toward the second sidewall surface.

In various embodiments, the fitting may include a lock assembly configured to translate between a locked position and an unlocked position. The locked position is configured to restrict movement of the fitting in the first direction and in the second direction.

In various embodiments, the seat fitting channel is defined by a channel floor, a first channel wall extending from the channel floor, a second channel wall extending from the channel floor, a first channel flange extending from the first channel wall, and a second channel flange extending from the second channel wall. The first channel flange may include a first upper surface oriented away from the channel floor, a first lower surface oriented toward the channel floor, and a first vertical surface extending between the first upper surface and the first lower surface. The second channel flange may include a second upper surface oriented away from the channel floor, a second lower surface oriented toward the channel floor, and a second vertical surface extending between the second upper surface and the second lower surface.

In various embodiments, the first vertical surface of the first channel flange may define a first arcuate section and a first neck section, and the second vertical surface of the second channel flange may define a second arcuate section and a second neck section.

In various embodiments, a width between the first neck section and the second neck section may be configured to generate a first interference between the first protrusion and the first lower surface and a second interference between the second protrusion and the second lower surface.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates an aircraft being loaded with cargo, in accordance with various embodiments;
FIG. 2 illustrates a ULD located on a cargo deck and secured to various tie downs of a cargo handling system, in accordance with various embodiments;
FIG. 3A illustrates a tie down mounted to a roller tray, in accordance with various embodiments;
FIG. 3B illustrates an exploded view of the tie down of FIG. 3A, in accordance with various embodiments;
FIGs. 4A and 4B illustrate a tie down with the rail engagement pins of the tie down in a retracted position and with the pin studs of the tie down in an unlocked state, in accordance with various embodiments;
FIGs. 5A and 5B illustrate a tie down with the rail engagement pins of the tie down in an extended position and with the pin studs of the tie down in a locked state, in accordance with various embodiments;
FIG. 6A illustrates a restraint assembly having a seat track fitting secured to a tie down, in accordance with various embodiments;
FIG. 6B illustrates a tie down and a seat track fitting of a restraint assembly, in accordance with various embodiments; and
FIGs. 7A and 7B illustrate, respectively, a perspective view and a cross-section view, taken along the line 7B-7B in FIG. 7A, of a load applied to a restraint assembly, in accordance with various embodiments.

### DETAILED DESCRIPTION OF THE DRAWINGS

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

Cross hatching lines may be used throughout the figures to denote different parts but not necessarily to denote the same or different materials. Throughout the present disclosure, like reference numbers denote like elements. Accordingly, elements with like element numbering may be shown in the figures but may not necessarily be repeated herein for the sake of clarity.

As used herein, "aft" refers to the direction associated with the tail (i.e., the back end) of an aircraft, or generally, to the direction of exhaust of a gas turbine engine. As used herein, "forward" refers to the direction associated with the nose (i.e., the front end) of an aircraft, or generally, to the direction of flight or motion.

Cargo handling system tie downs, as disclosed herein, include a single rail pin interface on each side of the tie down carriage and a seat track channel. The single rail pin interface allows the tie down to rotate, and thereby accommodate a multitude of load angles. The seat track channel makes the tie down compatible with seat track style strap fittings. In this regard, tie downs, as described herein, tend to increase the flexibility for the operator by providing an interface that is compatible with an assortment of cargo strap fitting. The orientation of the seat track channel \tends to decrease the space occupied by tie down, thereby allowing the tie down to be employed in areas with restricted clearance.

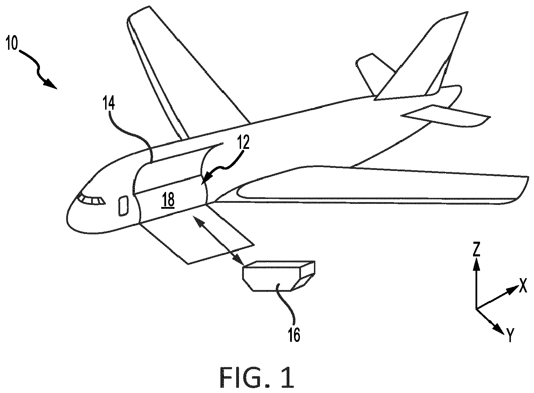

With reference to FIG. 1, an aircraft 10 is illustrated. Aircraft 10 includes a cargo compartment 12. A cargo doorway 14 provides access to cargo compartment 12 from outside aircraft 10. Cargo 16 (e.g., a ULD) may be loaded and unloaded through cargo doorway 14 and onto a cargo deck 18 of aircraft 10.

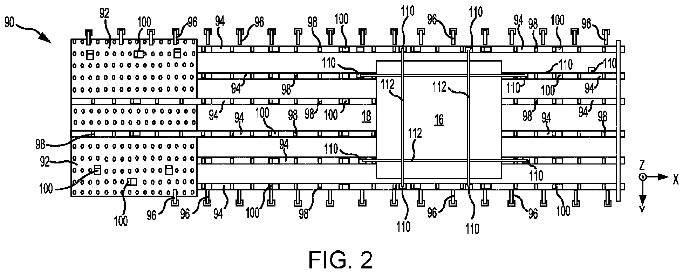

With reference to FIG. 2, a cargo handling system 90 is illustrated. In accordance with various embodiments, cargo handling system 90 may be used to load, move, and unload cargo 16 on cargo deck 18. Cargo handling system 90 includes components configured to facilitate translation of cargo 16 along cargo deck 18. For example, cargo handling system 90 may include ball mats 92, roller trays 94, and guide rails 96. In various embodiments, ball mats 92 may be located proximate cargo doorway 14, with momentary reference to FIG. 1. Roller trays 94, which each include one or more roller(s) 98, may be oriented in a longitudinal direction. As used herein, the term "longitudinal" refers to forward and aft directions (i.e., a direction parallel to the x-axis on the provided xyz axes). In this regard, roller trays 94 may facilitate forward and aft translation of cargo 16. Cargo handling system 90 may further include one or more power drive units (PDUs) 100 configured to propel cargo 16 in a desired direction. PDUs 100 may be located in ball mats 92, roller trays 94, and/or in any other desired location along cargo deck 18. Guide rails 96 may be located along the edges of cargo deck 18. Guide rails 96 may restrict lateral and vertical translation of cargo 16. As used herein, the term "lateral" refers to directions perpendicular to the longitudinal direction (i.e., directions parallel to the y-axis on the provided xyz axes). As used herein, the term "vertical" refers to directions perpendicular to the cargo deck 18 (i.e., direction perpendicular to the xy-plane and/or parallel to the z-axis on the provided xyz axes).

Cargo handling system 90 may include one or more tie downs 110. In various embodiments, tie downs 110 may be locating in and/or mounted to one or more of the roller trays 94. Cargo straps 112 are located over and/or around cargo 16 and are secured to tie downs 110. The location of the tie downs 110 (and thus the location of cargo straps 112) is selected to restrict and/or prevent movement of cargo 16.

In accordance with various embodiments, cargo handling system 90 may include any number of tie down 110 coupled to roller trays 94 at any desired location. Which tie downs 110 are engaged with cargo straps 112 is determined (e.g., by an operator) based on the cargo being loaded/unloaded and/or based on where restraint is desired. In this regard, tie downs 110 are positioned to provide a cargo handling system having customizable longitudinal, lateral, and/or vertical restraint(s) throughout the cargo deck.

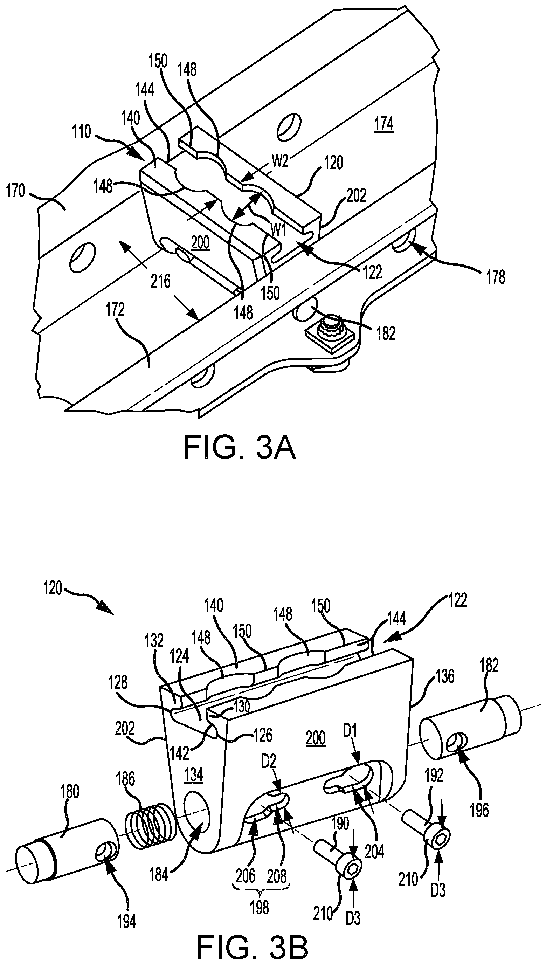

With reference to FIGs. 3A and 3B, a tie down 110 of cargo handling system 90 is illustrated. In accordance with various embodiments, tie down 110 includes a carriage 120. Carriage 120 defines a seat fitting channel 122. Seat fitting channel 122 is defined, at least partially, by a channel floor 124, a pair of opposing channel walls 126, 128 (also referred to as first channel wall 126 and second channel wall 128), and a pair of channel flanges 130, 132 (also referred to as first channel flange 130 and second channel flange 132). Channel floor 124 extends from a first sidewall surface 134 of carriage 120 to a second sidewall surface 136 of carriage 120. Stated differently, a length (or longest) dimension of channel floor 124 may extend in the lateral direction (e.g., in a direction perpendicular to the longitudinal/fore-aft direction). Stated yet another way differently, the length (or longest) dimension of channel floor 124 may extend in a direction approximately perpendicular to first and second sidewall surfaces 134, 136 and approximately parallel to a first surface 200 and a second surface 202 of carriage 120. As used in the previous context only, the term "approximately" mean ± 5°. First surface 200 of carriage 120 may extend from first sidewall surface 134 to second sidewall surface 136. Second surface 202 of carriage 120 is opposite (e.g., oriented away) from first surface 200 and extends from first sidewall surface 134 to second sidewall surface 136. First and second surfaces 200, 202 may be generally perpendicular to first and second sidewall surfaces 134, 136 and to first and second rails 170, 172.

First channel wall 126 extends vertically from channel floor 124 to first channel flange 130. Second channel wall 128 extends vertically from channel floor 124 to second channel flange 132. First channel flange 130 extends from first channel wall 126 toward second channel flange 132 and away from first surface 200. Second channel flange 132 extends from second channel wall 128 toward first channel flange 130 and away from second surface 202. Channel flanges 130, 132 each include an upper surface 140, a lower surface 142 opposite the upper surface 140, and a vertical surface 144 extending between the upper surface 140 and the lower surface 142. Upper surface 140 is oriented away from channel floor 124. Lower surface 142 is oriented towards channel floor 124. Channel walls 126, 128 may be approximately perpendicular to channel floor 124. As used in the previous context, "approximately perpendicular" means ±5° from perpendicular. Opposing channel walls 126, 128 are spaced apart from each other and may be disposed approximately parallel to one another. As used in the previous context, "approximately parallel" means ±5° from parallel. Opposing channel walls 126, 128 may also be curved and/or include a curved transition (e.g., a fillet) with channel floor 124 and/or with lower surface 142 of channel flanges 130, 132, respectively.

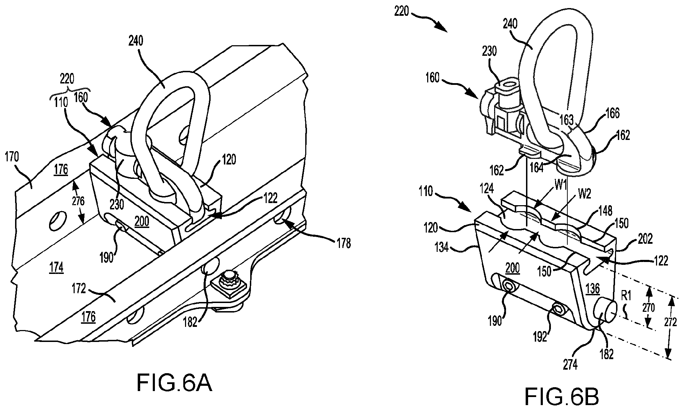

Seat fitting channel 122 is configured to receive, at least, a portion of a strap fitting 160, with momentary reference to FIG. 6B. In various embodiments, vertical surfaces 144 of channel flanges 130, 132 define a plurality of arcuate sections 148 and a plurality of neck sections 150 interspersed between arcuate sections 148. Arcuate sections 148 each include a width W1, as measured between vertical surface 144 of first channel flange 130 and vertical surface 144 of second channel flange 132. Neck sections 150 each include a width W2, as measured between vertical surface 144 of first channel flange 130 and vertical surface 144 of second channel flange 132. The width W2 of neck sections 150 is less than the width W1 of arcuate section 148. As discussed in further detail below, arcuate sections 148 are configured to receive the horizontally extending protrusions 162 of strap fitting 160 (FIG. 6B), and neck sections 152 are configured to generate an interference with the protrusions 162 to restrict vertical movement of strap fitting 160.

Carriage 120 may be secured to a roller tray 94 of cargo handling system 90. In various embodiments, carriage 120 may be located between a first rail 170 and a second rail 172 of roller tray 94. First and second rails 170, 172 may each extend vertically from a rail floor 174 of roller tray 94. First sidewall surface 134 of carriage 120 may be located proximate to and oriented toward first rail 170. Second sidewall surface 136 of carriage 120 may be located proximate to and oriented toward second rail 172. Tie down 110, roller tray 94, and roller 98 may be referred to herein as a roller tray assembly.

Tie down 120 further includes a pair of rail interface pins 180, 182 (also referred to as first rail interface pin 180 and second rail interface pin 182). Rail interface pins 180, 182 may be located in a pin channel 184 defined by carriage 120. Pin channel 184 may extend from first sidewall surface 134 to second sidewall surface 136. One or more biasing member(s) 186 (e.g., coil spring(s)) may be located in pin channel 184. Biasing member(s) 186 is/are configured to bias first rail interface pin 180 away from second rail interface pin 182. In this regard, biasing member(s) 186 is/are configured to bias first rail interface pin 180 toward first rail 170, and to bias second rail interface pin 182 toward second rail 172. First and second rails 170, 172 may each define a plurality of pin openings 178. Pin openings 178 are configured to receive rail interface pins 180, 182. Carriage 120 is secured to roller tray 94 by locating first rail interface pin 180 in a first pin opening 178 of first rail 170 and second rail interface pin 182 in a second pin opening 178 of second rail 172.

Tie down 110 may further include a pair of pin studs 190, 192 (also referred to as first pin stud 190 and second pin stud 192). Pin studs 190, 192 may be configured to engage rail interface pins 180,182. For example, first pin stud 190 may be in threaded engagement with a threaded stud channel 194 defined by first rail interface pin 180. Second pin stud 192 may be in threaded engagement with a threaded stud channel 196 defined by second rail interface pin 182.

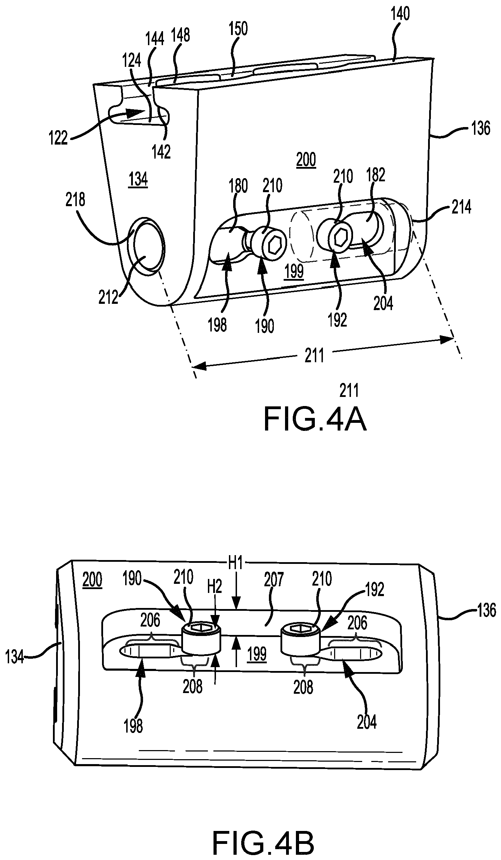

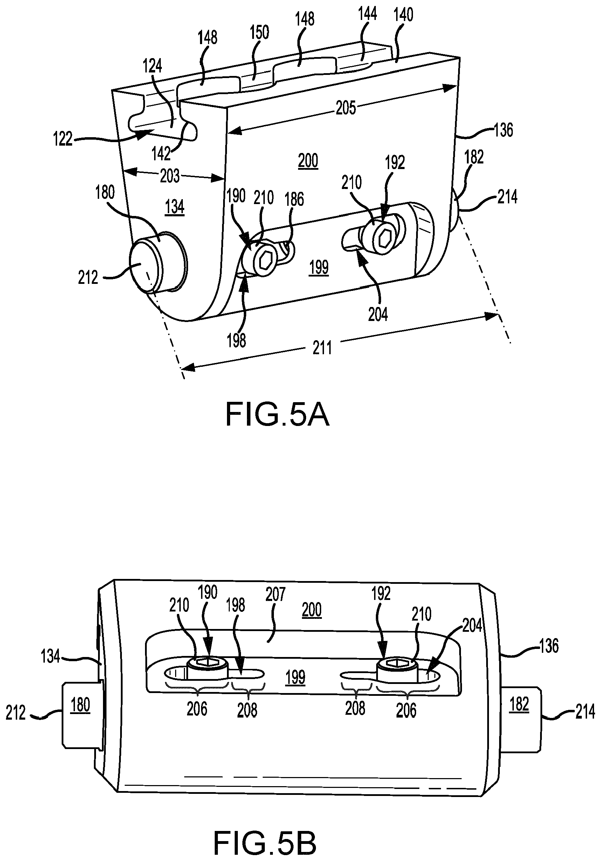

With additional reference to FIGs. 4A and 4B, first pin stud 190 may be located through a first stud opening 198. First stud opening 198 is defined by (e.g., formed through) a recessed surface 199 of carriage 120. Recessed surface 199 is recessed relative to first surface 200 of carriage 120. A distance between recessed surface 199 and second surface 202 is less than the distance between first surface 200 and second surface 202. In this regard, a width of carriage 120 measured between recessed surface 199 and second surface 202 is less than a width 203 (FIG. 5A) of carriage 120. With momentary reference to FIG. 5A, width 203 of carriage 120 is measured between first surface 200 and second surface 202. In accordance with various embodiments, width 203 is less than a length 205 of carriage 120. Length 205 is measured between first sidewall surface 134 and second sidewall surface 136.

Returning to FIG 4B, carriage 120 may include a horizontal surface 207 (FIG. 4B) extending between recessed surface 199 and first surface 200. A height H1 of horizontal surface 207, as measured between recessed surface 199 and first surface 200, may be greater than a height H2 of each of the heads 210 of first and second pin studs 190, 192.

Second pin stud 192 may be located through a second stud opening 204 defined by (e.g., formed through) recessed surface 199 of carriage 120. Each of first stud opening 198 and second stud opening 204 includes a first portion 206 and a second portion 208. With reference to FIG. 3B, a diameter (or distance) D1 between the opposing stud opening walls that define first portion 206 is greater than a diameter (or distance) D2 between the opposing stud opening walls that define second portion 208. Diameter D1 is the measured between the opposing stud opening walls defining first portion 206. Diameter D2 is measured between the opposing stud opening walls that define second portion 208. The diameter D1 of first portion 206 is greater than the diameter D3 of the head 210 of each of first and second pin studs 190, 192. Diameter D2 of second portions 208 is less than the diameter D3 of the heads 210 first and second pin studs 190, 192.

FIGs. 4A and 4B illustrate rail interface pins 180, 182 in a retracted position with pin studs 190, 192 in an unlocked state. In the retracted position, the distance 211 between distal end 212 of first rail interface pin 180 and distal end 214 of second rail interface pin 182 is less than or equal to the distance 216 (FIG. 3A) between first rail 170 and second rail 172. In the unlocked state, the heads 210 of pin studs 190, 192 are positioned a sufficient distance away from their respective rail interface pin 180, 182 such that heads 210 can be located over recessed surface 199. Stated differently, in the unlocked state the distance between each head 210 and its respective rail interface pin is greater than the thickness of carriage 120 as measured between recessed surface 199 and the surface 218 defining pin channel 184. To translate rail interface pins 180, 182 to the retracted position, pin studs 190, 192 may be translated into second portions 208 of stud openings 198, 204. In this regard, in the retracted position, pin studs 190, 192 may be located in second portions 208 of stud openings 198, 204.

FIGs. 5A and 5B illustrate rail interface pins 180, 182 in an extended position with pin studs 190, 192 in a locked state. In the extended position, the distance 211 between distal end 212 of first rail interface pin 180 and distal end 214 of second rail interface pin 182 is greater than the distance 216 between first rail 170 and second rail 172, thereby locating a portion of each of the rail interface pins 180, 182 in a pin opening 178. In the locked state, the heads 210 pin studs 190, 192 are positioned a sufficient distance away from their respective rail interface pin 180, 182 to create an interference between head 210 and carriage 120. Stated differently, in the locked state, the distance between each head 210 and its respective rail interface pin 180, 182 is less than the thickness of carriage 120 as measured between recessed surface 199 and the surface 218 defining pin channel 184. The interference between head 210 and carriage 120 (e.g., the interference between head 210 and the portion of carriage 120 that defines second portion 208 of stud openings 198, 204) blocks or otherwise prevents rail interface pins 180, 182 from translating into the retracted position. In this regard, the interference between head 210 and carriage 120 maintains distal end 212 of first rail interface pin 180 and distal end 214 of second rail interface pin 182 at a distance 211 that is greater than the distance 216. The distance between each head 210 and its respective rail interface pin 180, 182 may be adjusted by rotating the pin stud 190, 192 relative to its rail interface pin 180, 182 (e.g., by screwing or unscrewing the pin stud).

With reference to FIG. 6A and 6B, tie down 120 is configured to receive and engage strap fitting 160. Strap fitting 160 and tie down 110 may be referred to herein as a restraint assembly 220. Strap fitting 160 includes horizonal protrusions 162. Horizonal protrusions 162 are provided with a shape complementary to arcuate sections 148 in carriage 120. Strap fitting 160 includes a lock assembly 230. Lock assembly 230 is movable between a locked position (FIG. 6A) and an unlocked position (FIGs. 6B). The locked position inhibits lateral movement of strap fitting 160 relative to carriage 120 (e.g., inhibits movement of strap fitting 160 toward and away from first and second sidewall surfaces 134, 136 of carriage 120). The unlocked position permits movement of strap fitting 160 toward and away from first and second sidewall surfaces 134, 136 of carriage 120. Protrusions 162 may extend horizontally from a first fitting sidewall 164 and from a second fitting sidewall 166. Second fitting sidewall 166 is oriented away from first fitting sidewall 164.

The width 163 of strap fitting 160, as measured between first fitting sidewall 164 and second fitting sidewall 166, is less than the width W2 between neck sections 150 of carriage 120. Strap fitting 160 may be inserted into seat fitting channel 122 by locating protrusions 162 through arcuate sections 148. Strap fitting 160 may then be translated toward first sidewall surface 134 or second sidewall surface 136 until neck sections 150 are located over protrusions 162 such that lower surfaces 142 of channel flanges 130, 132 generates an interference with protrusions 162 to prevent vertical movement of strap fitting 160.

Locating neck sections 150 over protrusions 162 aligns lock assembly 230 with an arcuate section 148 in both first and second channel flanges 130, 132, thereby allowing lock assembly 230 to be translated into the locked position (i.e., into the arcuate section 148). Locating lock assembly 230 in an arcuate section 148 generates an interference between lock assembly 230 and neck sections 150, thereby restricting or preventing movement of strap fitting 160 toward or away from first and second sidewall surfaces 134, 136 and/or toward or away from first and second rails 170, 172. In various embodiments, a strap ring 240 may be coupled to strap fitting 160. Strap ring 240 may a allow a hook attached to a cargo strap (e.g., attached to a cargo strap 112 in FIG. 2) to be secured to strap fitting 160. In various embodiments, a cargo strap 112 (FIG. 2) may be directly attached to strap ring 240. For example, an end of the cargo strap 112 may be configured (sewn) in a loop and strap ring 240 may be located through the loop. Stated differently, the cargo strap 112 may be sewn around strap ring 240.

In accordance with various embodiments, a distance 270 between an axis of rotation R1 of carriage 120 and channel floor is configured to locate channel floor 124 above an upper rail surface 176 of each of first and second rails 170. Upper rail surface 176 is oriented away from rail floor 174. For example, distance 272 between a bottom point 274 of carriage 120 and channel floor 124 is greater than a height 276 of each of first and second rails 170. The bottom point 274 of carriage 120 being the farthest/most distal point from channel floor 124 (e.g., the bottom point 274 may be the end of carriage 120 where first surface 200 and second surface 202 meet). The height 276 of first and second rails 170, 172 is measured between rail floor 174 and the upper rail surface 176 of each of first and second rails 170, 172. Locating channel floor 124 above first and second rails 170, 172 tends to allow for easy removal of strap fitting 160, as strap fitting 160 can move laterally (e.g., parallel to axis of rotation R1) without contacting first and second rails 170, 172.

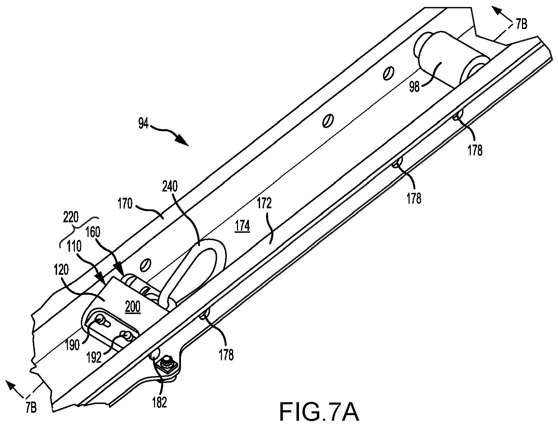

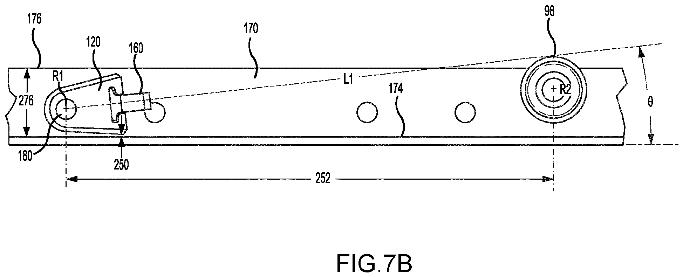

With reference to FIGs. 7A and 7B, carriage 120 may rotate relative to first and second rails 170, 172 in response to a load L. The configuration of carriage 120, for example, orienting seat fitting channel 122 perpendicular to first and second rails 170, 172, allows for a narrower carriage 120 (e.g., a carriage 120 having shorter width 203). A narrower carriage increases the range of angles θ carriage 120 may rotate without contacting rail floor 174. Locating heads 210 over recessed surface 199, as opposed to first surface 200 may also increase the range of angle θ. Angle θ may be formed by the load L applied to carriage 120 and rail floor 174. Load L may be a cargo strap 112. The width 203 of carriage 120 is configured such that at a maximum distance 252 between the axis of rotation R1 of carriage 120 (e.g., an axis of rotation of rail interface pins 180, 182) and the axis of rotation R2 of roller 98, a clearance 250 is maintained between carriage 120 and rail floor 174. In various embodiments, angle θ may be less than 10° and still maintains clearance 250 of at least 0.02 inches (0.51 mm). In various embodiments, angle θ may be less than 8° and maintains a clearance 250 of at least 0.02 inches (0.51 mm). In various embodiments, angle θ may be less than 7° and maintains a clearance 250 of at least 0.02 inches (0.51 mm). In various embodiments, angle θ may be about 6.5° and maintains a clearance 250 of at least 0.02 inches (0.51 mm). As used in the previous context only, "about" means ± 0.25°. Stated differently, first rail interface pin 180 may rotate ± 83.5° about axis R1 from vertical (e.g., from 0°) without generating contact between carriage 120 and rail floor 174. Vertical (0°) is 90° about axis R1 from rail floor 174. Increasing the range of motion of carriage 120 allows for greater flexibility in tie down positions that distribute the load into the carriage 120 and first and second rails 170, 172.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A tie down (110) for a cargo handling system (90), comprising:
a carriage (120) including a first sidewall surface (134), a second sidewall surface (136) opposite the first sidewall surface, a first surface (200) extending from the first sidewall surface to the second sidewall surface, and a second surface (202) opposite the first surface;
a first rail interface pin (180) configured to extend from the first sidewall surface;
a second rail interface pin (182) configured to extend from the second sidewall surface; and
a seat fitting channel (122) formed in the carriage and extending between the first sidewall surface and the second sidewall surface.

2. The tie down (110) of claim 1, wherein the seat fitting channel (122) is defined by:
a channel floor (124);
a first channel wall (126) extending from the channel floor (124);
a second channel wall (128) extending from the channel floor;
a first channel flange (130) extending from the first channel wall and away from the first surface, the first channel flange including a first upper surface (140) oriented away from the channel floor, a first lower surface (142) oriented toward the channel floor, and a first vertical surface (144) extending between the first upper surface and the first lower surface; and
a second channel flange (132) extending from the second channel wall and away from the second surface, the second channel flange including a second upper surface oriented away from the channel floor, a second lower surface oriented toward the channel floor, and a second vertical surface extending between the second upper surface and the second lower surface.

3. The tie down of claim 2, wherein the first vertical surface (144) of the first channel flange defines a first arcuate section (148) and a first neck section (150), and wherein the second vertical surface of the second channel flange (132) defines a second arcuate section and a second neck section.

4. The tie down of claim 3, wherein a first distance between the first surface (200) of the carriage (120) and the first vertical surface (144) of the first channel flange (130) is greater a second distance between the first surface of the carriage and the first vertical surface of the first channel flange, the first distance being measured at the first neck section and along the first upper surface, the second distance being measured at the first arcuate section and along the first upper surface.

5. The tie down of any preceding claim, further including:
a first stud pin (190) coupled to the first rail interface pin (180) and extending through a first stud opening (198) defined by the carriage; and
a second stud pin (192) coupled to the second rail interface pin (182) and extending through a second stud opening (204) defined by the carriage.

6. The tie down of claim 5, wherein the first stud opening (198) includes a first portion (206) having a first diameter and a second portion (208) having a second diameter less than the first diameter, and wherein the first portion is located closer to the first sidewall surface (134) as compared to the second portion; and optionally
wherein the first stud opening (198) and the second stud opening (204) are formed in a recessed surface of the carriage, the recessed surface being recessed with respect to the first surface of the carriage.

7. The tie down of any preceding claim, wherein a length of the carriage (120) as measured between the first sidewall surface (134) and the second sidewall surface (136) is greater than a width of the carriage as measured between the first surface and the second surface.

8. A roller tray assembly, comprising:
a roller tray (94) having a first rail (170) defining a plurality of first pin openings (178) and a second rail (172) defining a plurality of second pin openings (178);
a roller (98) located between the first rail and the second rail; and
a tie down (110) located between the first rail and the second rail, the tie down comprising:
a carriage (120) including a first sidewall surface (134) oriented toward the first rail and a second sidewall surface (136) oriented toward the second rail;
a first rail interface pin (180) configured to extend from the first sidewall surface;
a second rail interface pin (182) configured to extend from the second sidewall surface; and
a seat fitting channel (122) formed in the carriage.

9. The roller tray assembly of claim 8, wherein the seat fitting channel (122) is defined by:
a channel floor (124);
a first channel wall (126) extending from the channel floor;
a second channel wall (128) extending from the channel floor;
a first channel flange (130) extending from the first channel wall and away from a first surface of the carriage, wherein the first channel flange includes a first upper surface (140) oriented away from the channel floor, a first lower surface (142) oriented toward the channel floor, and a first vertical surface (144) extending between the first upper surface and the first lower surface; and
a second channel flange (132) extending from the second channel wall and away from a second surface of the carriage, wherein the second channel flange includes a second upper surface oriented away from the channel floor, a second lower surface oriented toward the channel floor, and a second vertical surface extending between the second upper surface and the second lower surface.

10. The roller tray assembly of any of claims 8 or 9, wherein the carriage (120) is configured to rotate relative to the first rail (170) and the second rail (172); optionally
wherein a length of the carriage (120) as measured between the first sidewall surface (134) and the second sidewall surface (136) is greater than a width of the carriage as measured between the first surface and the second surface; further optionally
wherein the first vertical surface (144) of the first channel flange (130) defines a plurality of first arcuate sections (148) and a plurality of first neck sections (150), and wherein the second vertical surface of the second channel flange defines a plurality of second arcuate sections and a plurality of second neck sections; further optionally
wherein the first rail interface pin (180) may rotate ±83.5° about an axis without generating contact between the carriage and a floor of the roller tray, wherein 0° is 90° as measured about the axis from the floor of the roller tray.

11. The roller tray assembly of any of claims 8 to 10, wherein the tie down (110) further includes
a first stud pin (190) coupled to the first rail interface pin (180) and extending through a first stud opening (198) defined by the carriage; and
a second stud pin coupled to the second rail interface pin and extending through a second stud opening (204) defined by the carriage.

12. A restraint assembly (220), comprising:
a fitting (160) including a first protrusion extending from a first fitting sidewall and a second protrusion extending from a second fitting sidewall; and
a tie down (110) configured to receive the fitting, the tie down comprising:
a carriage (120) including a first sidewall surface and a second sidewall surface oriented away from the first sidewall surface;
a first rail interface pin (180) configured to extend from the first sidewall surface;
a second rail interface pin (182) configured to extend from the second sidewall surface; and
a seat fitting channel (122) formed in the carriage and configured to receive the fitting, wherein the seat fitting channel is configured such that the fitting may translate within the seat fitting channel in a first direction toward the first sidewall surface and in a second direction toward the second sidewall surface.

13. The restraint assembly of claim 12, wherein the fitting (160) includes a lock assembly (230) configured to translate between a locked position and an unlocked position, wherein the locked position is configured to restrict movement of the fitting in the first direction and in the second direction.

14. The restraint assembly of claim 13, wherein the seat fitting channel is defined by:
a channel floor (124);
a first channel wall (126) extending from the channel floor;
a second channel wall (128) extending from the channel floor;
a first channel flange (130) extending from the first channel wall, the first channel flange including a first upper surface oriented away from the channel floor, a first lower surface oriented toward the channel floor, and a first vertical surface extending between the first upper surface and the first lower surface; and
a second channel flange (132) extending from the second channel wall, the second channel flange including a second upper surface oriented away from the channel floor, a second lower surface oriented toward the channel floor, and a second vertical surface extending between the second upper surface and the second lower surface.

15. The restraint assembly of claim 14, wherein the first vertical surface (144) of the first channel flange defines a first arcuate section (148) and a first neck section (150) , and wherein the second vertical surface of the second channel flange defines a second arcuate section and a second neck section; optionally
wherein a width between the first neck section and the second neck section is configured to generate a first interference between the first protrusion and the first lower surface and a second interference between the second protrusion and the second lower surface.
